# EUROPEAN PATENT APPLICATION

(11) **EP 4 456 413 A1**
(43) Date of publication of application: **30.10.2024**
(21) Application number: 23169597.4
(22) Date of filing: 24.04.2023
(51) Int. Cl.: H02P 29/032

(54) **MOTOR ROLLER AND METHOD FOR OPERATING A MOTOR ROLLER**

(71) Applicant: Kyowa Europe GmbH, 42799 Leichlingen (DE); Industrial Software, 1618 Sofia (BG)
(72) Inventor: Petrov, Dimitar Ivanov, 1225 Sofia (BG); Yankov, Nikola Aleksandrov, 1142 Sofia (BG); Suvandzhiev, Dimitar Hristov, 1750 / 1784 Sofia (BG); Petrov, Ivan Dimitrov, 1225 Sofia (BG); Ichieda, Kazuya, 673-0424 Miki city Hyogo Prefecture (JP); Malina, Georg, 40237 Düsseldorf (DE)
(74) Representative: Cohausz & Florack

(57) **Abstract**

A method for controlling a motor of a motor-roller, a motor-roller controller performing the method as well as a conveyor system is disclosed.

## Description

The subject matter relates to a method for controlling an electric motor of a motor roller, in particular a brushless direct current (BLDC) motor, in particular during braking and/or generator operation. The subject matter further relates to a controller for an electric motor or a motor-roller. Moreover, the subject matter relates to conveyor systems with motor-driven conveyors driven by motor-rollers.

Motor-driven conveyor-rollers, a.k.a. motor-rollers, comprise a roller body rotatably mounted about a roller axis. The roller body usually is a hollow tube. Within the roller body, the motor is arranged. The motor is an electric motor which is configured to generate a rotational movement about the roller axis between the axis and the roller body. The motor may typically be a brushless DC electric motor.

For the sake of understanding, in the following the term motor-roller can be used for the motor within the roller body alone, a drive unit comprising the motor and a corresponding control circuit for the motor within the roller body or the roller body comprising the motor or the drive unit. In the following the term motor can be used for the motor as such as well as the drive unit comprising the motor as such and a corresponding control circuit for the motor.

It is well known that motor-rollers are operated by a control unit, also known as controller, being arranged external, outside the roller body. The controller exchanges control signals with the motor inside the roller body.

Motor-driven conveyors driven by motor-rollers of this type are used in conveyor systems. In such conveyor systems, a single motor-rollers is used to operate several roller bodies within a conveyor zone. Conveyor systems oftentimes have several conveyor zones through which an object to be conveyed passes one after the other. As has been said, within each conveyor zone, at least one motor-driven conveyor-roller operates several rollers.

In such conveyor systems, it is critical that the motor-rollers perform reliably over prolonged time spans and run at controllable (often constant) speeds, even in the presence of strongly varying load conditions. Varying loads may for instance be caused by varying the size and/or weight of transported objects, different slopes, changes in operating speed and/or combinations thereof.

For instance, a motor roller, in particular a motor roller in accordance with the subject matter, may be positioned within a downwardly (in a direction of transport) oriented conveyor segment of the conveyor system. Due to the vertical component of the orientation of the conveyor segment, the motor roller is subject to (e.g., strongly) varying gravitational forces exerted onto the motor roller by the transported objects. The motor roller may at least partially be required to counteract the natural downward movement of the transported objects and may need to exert a braking force in order to ensure a constant transport speed. Similar situations arise in passages in which transported objects are to be slowed down from a first transport speed to a second transport speed, wherein the second is lower than the first.

It has been recognized that particularly a braking operation may lead to dangerous electric voltages caused by coils inside the motor which may damage a controller of the motor.

The motor comprises at least one electric coil and at least one (e.g., permanent) magnet. The magnet may be considered part of the rotor of the motor. The coil(s) may be considered the stator. The coil is energizable by a control circuit (e.g., comprised by a drive unit and/or a motor-roller controller) that is configured to provide electric voltage and/or current to the coil. The coil subsequently becomes magnetized and is attracted to and/or repelled from the magnet. This force between permanent magnet and magnetized coil drives the motor.

An angle between the stator and the rotor around the rotation axis may be defined as the rotation angle of the motor.

When decelerating (i.e., reducing the motor rotation speed over time) and when counter acting an external force such as gravitational force, inertial force or other types of forces, the electric motor acts as a generator. This mode of operation may be considered a generator operation. During generator operation, the motor exerts a torque acting against a transportation direction of the motor-roller.

In generator operation, the motor converts mechanic energy to electric energy. More precisely, electric voltage and/or current may be induced into at least one of the at least one coils. It has been recognized that in generator operation, excessive voltages over a coil may be caused. Such voltages may harm the control circuit (e.g., drive unit and/or motor-roller controller) and/or damage the motor.

It has further been recognized that due to an often fixed positioning of a motor roller within a conveyor system, some motors of motor rollers may need to withstand continued generator operation and are thus particularly endangered of being damaged and/or damaging their respective control circuits over time.

It is thus one of the objects of the subject matter, to protect motor-roller control circuits from over voltages caused during the generator operation of the controlled motors.

The object is solved by a method according to claim 1, motor-roller controller according to claim 13 or 14 and a conveyor system according to claim 15.

A first aspect of the subject matter relates to a method for controlling an electric motor of a motor roller in a step-wise switching pattern comprising a sequence of multiple mutually different switching phases, comprising, during a braking operation, in the majority of the switching phases,
- connecting a first and a second of three coils of the electric motor to a first pole of the power supply.

The motor controlled by the methods may comprise three or more coils. For instance, the coils may be arranged in a star-orientation (or wye orientation). The coils may be spaced apart by a constant angle. For instance in case of three coils, the coils may be spaced apart respectively by 120°. Other arrangements such as a delta arrangement of coils is also possible. Typically the coils are statically fixated to a stator.

A coil typically has to connectors by which it can be connected to other electrical components. If in the following, a coil is disclosed to be connected to another electrical element, for instance a pole of a power supply, this denotes that one of the connectors is connected to the another electrical element. For instance, in a star orientation of coils, the outer connector that is not connected to the other coils, may be connected to the another element in this case.

The motor further comprises at least one permanent magnet that is rotatably fixated, typically surrounded by the coils. The coils are mechanically fixated with respect to one another and the motor comprises at least one permanent magnet, wherein the permanent magnet is pivotably fixed with respect to the coils.

If a component is pivotably fixed, this may denote that a rotation around a rotation axis is possible but no translational movement radially to the axis and/or longitudinally to the axis is possible.

The method comprises connecting respective coils to a power supply. The power supply typically comprises direct current (DC) voltage. For instance, the power supply may comprise a battery, a power supply unit, a rectifier, a mains connection and/or combinations thereof. The power supply may comprise two poled, for instance a negative and a positive pole. Between the two poles, an electrical voltage may be provided.

A given coil of the motor may be connected to a first or a second pole of the power supply. For instance, the method may comprise to connect a given coil to either a negative or positive pole in order to provide a DC voltage to the coil.

For instance, a given coil may be connected to the output of a respective half-bridge. For a given coil, an individual half-bridge may be provided, i.e., every coil may have its own associated half-bridge. The respective half bridge may comprise two switches (e.g., transistors), one being arranged between a first (e.g., positive) pole of a power supply (e.g., positive voltage) and the output of the half bridge, the other one being arranged between the output of the half bridge and a second (e.g., negative) pole of the power supply (e.g., ground or a negative supply voltage).

Connecting a coil to a pole of a power supply may comprise closing at least one of the two switches of the half bridge connected to the coil. Connecting a coil to a power supply may also comprise intermittently closing and opening the respective switch in fast alternation (e.g., between 10kHz and 100kHz) in order to implement a pulse width modulation (PWM) control.

The method comprises controlling an electric motor in a step-wise switching pattern. The disclosed switching pattern comprises a sequence of multiple mutually different switching phases. A switching phase may be defined as a share of the total rotation of 360° of the motor combined with a given switching state (e.g., set by a controller) during this share of total rotation. If phases are defined as different, their switching states are different. The step-wise switching pattern may be defined for a full motor rotation of 360°. Within one such 360°-rotation, there may be multiple (i.e., at least 2, 3, 4, 5, 6, 7, 8, 9, 10, 11, 12 or more) mutually different switching phases.

A given switching state of the motor coils may be characterized by setting the three coils in a respective switching state. The switching states comprise the coil being connected to a first pole of a power supply, connected to a second pole of a power supply or disconnected from the power supply.

A step-wise switching pattern may comprise connecting a respective coil to a power supply to provide an electrical voltage to the coil at one of a limited set of voltage values. The provided voltage may be essentially constant during a non-zero share of possible rotation angles of the motor.

Typically, only two levels of power supply voltage are provided, a positive and a negative one, for instance Vcc and -Vcc or Vcc and 0. Additionally or alternatively, more levels may be provided, for instance an even number such as for instance 4 voltages such as Vcc, Vcc/2, -Vcc/2, -Vcc.

The voltage provided to the motor (difference between the positive and negative pole of the power supply) may be 24V DC, for instance.

The voltage values may be discrete and essentially constant over time, e.g., vary over time by less than 1%, 5% or 10%.

A switching pattern may be defined for a (e.g., full) rotation of the motor (i.e., a rotor of the motor) by 360°. After 360°, the switching pattern may repeat.

We will introduce a notation for individual switching states comprising three switching states for three coils and for the corresponding switching phases. A connection to the power supply of a given coil can be either P (positive), N (negative) or O (open). Positive means the coil is connected to a positive pole of the power supply. Negative means the coil is connected to a negative pole of the power supply. Open means the coil is disconnected from the power supply. Abbreviations for switching states are used in sets of three, wherein the position of the letter within the abbreviation indicates the respective coil. An example switching pattern may for instance be PNO (first coil positive, second coil negative, third one open) or NPO (first coil negative, second coil positive, third one open).

Connecting a given coil to a given pole of the power supply may for instance comprise connecting the coil to another coil wherein the another coil is connected to the given pole of the power supply. For instance, if the switching state NPO is currently active, connecting the third coil (which is floating, "O" in this switching state) to the negative pole of the power supply in order to form a NPN switching state, the third coil is connected to the first coil which is already connected to the negative pole of the power supply. Such switching may be comprised by connecting the (here, third) coil to the (here, negative) pole of the power supply, even if any switches of a half bridge usually used to connect a given coil to a respective pole are left open. In this case, another way of connecting the two coils is used. For instance, internal switches of the motor may be used to connect the two coils. Connecting two coils serves the purpose to provide a closed current path, in particular a short circuit comprising two coils. Connecting a first and a second of three coils of the electric motor to a first pole of the power supply may also be understood alternatively or cumulatively to provide a closed current path, in particular a short circuit comprising two coils. The first pole may be an internal pole. By this, currents can flow inside the motor coils without placing any burden on the power supply. Such connecting may for instance be implemented by operating two half bridges of the respective coils to connect the two coils to the same pole of the power supply or by closing different switches, e.g., internal to the motor, that connect the coils. The effect is the same. Energy generated by the coils can be dissipated inside the coils of the motor.

According to an embodiment, the coils may be assigned to phases U, V and W. The notation above may denote the switching states of the three phases. I.e., the first letter may indicate the switching state for U, the second for V and the third for W.

A switching pattern may comprise at least 2, 3, 4, 5 or 6 switching phases. A switching pattern may also comprise 12 switching phases or more, for instance. The switching phases may be mutually distinct. For instance, switching phases within one switching pattern may not repeat throughout one full rotation of 360° of the motor. For instance, at least one or more switching phases within one switching pattern may repeat at least once throughout one full rotation of 360° of the motor. For instance, at least two switching phases may be different from one another withing a switching pattern.

For a given switching phase, an angle coverage may be defined. For instance in a 6-step motor control, a switching phase may span a 6^{th} of the total rotation, i.e., 60°. One step in a 12-step motor control pattern may span 30°. The switching phases may be equally long, i.e., span equal amounts of degrees.

In a first example switching pattern, we will consider a 6-step motor control. In this case, the switching pattern may comprise six distinct phases, in which, for instance at all times, two of the coils are connected to a power supply and the third coil is not connected to the power supply. According to one configuration, the two coils connected to the power supply are connected to mutually different poles of the power supply so that a current can be driven through the two coils. The third coil, which is not connected to the power supply in a given phase of the control pattern, is not connected to either the positive of the negative pole of the power supply (it is "floating") and therefore no current flows through the coil and thus no magnetization is achieved. In a 6-step motor control, the following six switching phases may be iterated through: PNO, PON, OPN, NPO, NOP, ONP.

It has been recognized that these switching phases comprising an open, i.e., disconnected coil, may be problematic during braking operation (i.e., generator operation of the motor). They may be denoted O-phases.

In a 12-step motor control, additional switching phases in between the above switching phases exist. In the additional switching phases two coils are connected to the same pole of the power supply, i.e. the full sequence of switching phases may be PNO, PNN, PON, PPN, OPN, NPN, NPO, NPP, NOP, NNP, ONP, PNP. As can be seen, the 12-step motor control comprises the O-phases comprised by the 6-step motor control above as well as the switching phases PNN, PPN, NPN, NPP, NNP, PNP which may be referred to as (fully) connected switching phases, i.e. C-phases.

A given switching phase within a switching pattern typically has an associated rotation angle. The rotation angle may be detected by sensors such as for instance Hall sensors. For a switching phase, a regular rotation angle coverage may be defined. For instance, in the sequence PNO, PON, OPN, NPO, NOP ONP of a 6-step motor control, the regular first switching phase PNO may be associated the rotation angle coverage of 0°-59°, the next one 60°-119° and so on in steps of 60°. For instance, in the sequence PNO, PNN, PON, PPN, OPN, NPN, NPO, NPP, NOP, NNP, ONP, PNP of a 12-step motor control, the first switching phase PNO may be associated the rotation angle coverage of 0°-29°, the next one (PNN) with 30°-59° and so on in steps of 30°. Vice versa, for the 6-step and 12-step motor control patterns, every rotation angle may have an associated regular switching phase. For instance, angles in the range 0-59° of a 6-step motor control pattern and the range 0-29° in a 12-step motor control pattern may have the associated regular switching phase PNO and so on.

The regular switching phases and regular rotation angle coverages for the 6- and 12-step motor control may be used as a reference point to describe features of the present disclosure with respect to the standard 12-step motor control switching pattern.

If a switching phase is disclosed during which one or more switching states are provided to the coils of the motor, this may always, inter alia, mean that the switching patterns are provided within a regular switching phase (e.g., withing the regular range of rotation angles associated with the regular switching phase).

According to an embodiment, C-phases may be left unchanged by the proposed method. I.e., for instance in a 12-step motor control pattern, only the O-phases may be altered with respect to the above disclosed sequence of steps.

According to an embodiment, the C-phases as disclosed above may also be altered in the proposed method with respect to the above sequence.

The motor may be controlled by means of a controller, for example a proportional integral (PI) controller. The controller may for instance regulate the share of one phases in the pulse width modulated electrical voltages applied to the coils. The controller may further regulate the duration of the different phases of the control pattern before switching to the next phase.

The method may comprise applying the switching pattern throughout the braking operation (e.g., and the propulsion operation). I.e, the motor is still controlled to a (e.g., constant) speed by applying current to the coils during braking. Thereby, a controlled braking is achieved.

In braking operation (i.e., generator operation), the magnetized coils counteract the rotation in transport direction of the rotating permanent magnet(s). If a given pole of the permanent magnet approaches a given coil, the coil is magnetized to repel the permanent magnet, if the pole leaves the vicinity of the coil, the coil is magnetized to attract the permanent magnet. The permanent magnet thereby induces voltages in the coil. The induced voltages may exceed the voltages typically applied by the power supply to the coil and may even reach values that exceed maximum voltage ratings of the controller.

Coming back to the switching phases in the switching pattern, some switching phases (O-phases) exist, in which one coil is disconnected from the power supply and two coils are connected in series with one another and with the power supply (i.e., connected to one of both poles of the power supply respectively). If a voltage is induced into one of the coils or both, this voltage will be applied to the power supply and may harm the control circuit. In particular, induced voltages may transfer without internal compensation inside the coils to the power supply. As the third coil is not connected to the power supply or to any of the other two coils by any of the two switches, it does not carry current and therefore does not dissipate any energy in typical control patterns.

It has been recognized that in the O-phases, the third coil may be used to dissipate energy generated by the two other coils during generator operation.

It is therefore proposed employ a control pattern in which in the majority of switching phases, a first and a second of the three coils of the electric motor are connected to a first pole of the power supply.

It is to be understood, that the ordinal adverbs "first", "second" and "third" used for coils of the motor and poles of the power supply are only used to distinguish the two to three entities from one another in a given context. Any of the three coils (e.g., U, V or W phase) may be denoted "first", "second" or "third" depending on the current rotation angle of the motor in a given switching phase. Similarly, the positive and negative pole of the power supply may be "first" or "second" respectively. "First", "second" and "third" however always denote distinct entities.

By connecting two (e.g., a first and a second) of the three coils to the same pole of the power supply, a closed current path may be closed comprising the two coils. This holds for different wiring patterns such as a star arrangement of coils and a delta arrangement. A closed current path allows generated (e.g., induced) voltages of the coils (e.g., during generator operation) to be converted to heat through ohmic losses in the coils without the respective current being directed through the power supply.

According to an embodiment of the first exemplary aspect, a coil is a single coil or a coil comprises a group of sub-coils, wherein the sub-coils within a group are switched identically to one another.

For instance, the motor comprises exactly 3 coils and not more. If the motor comprises more than 3 coils, the total number of coils may for instance be multiple of 3, e.g., 6, 12, 18, 24, 32 or more. For example, the coils may then be grouped to three groups of N coils each. The switching pattern for the 3 groups of N coils may respectively be identical to the switching pattern for the respective individual 3 coils disclosed in here.

According to an embodiment of the first exemplary aspect, connecting a first and a second of the three coils to a first pole of the power supply is based on a measured voltage across at least one coil of the electric motor.

For instance, the method may comprise measuring a voltage across at least one of the three coils, across two or three of the three coils individually (e.g., between a central star-connection of the coils and the respective other connection of the respective coil). Additionally or alternatively, a voltage may be measured across at least one series of a respective two of the three coils. For instance, a voltage may be measured across two or three pairs of coils connected in series respectively.

For instance, the measured voltage may correspond to at least one measured voltage and/or to a minimum, an average and/or a maximum across at least two measured voltages.

For instance, if the measured voltage exceeds a predefined threshold, the connecting may be activated.

For instance, during a given switching phase, the measured voltage may be monitored and if it exceeds the predefined threshold, the connecting may be activated for the switching phase, e.g., until a rotation angle coverage of the switching phase is completed and the next switching phase is reached.

A predefined voltage threshold may for instance correspond to 50%, 60%, 70%, 80%, 90%, 100%, 110%, 120%, 130%, 150%, 200%, 250%, 300% or more of the voltage of the power supply.

According to an embodiment of the first exemplary aspect, connecting the first and the second coil to the first pole of the power supply comprises forming a closed current path, in particular a closed current path disconnected from at least one pole of the power supply.

The closed current path may for instance only be connected to the positive or the negative pole of the power supply. Thereby, the power supply is shielded against any current being generated in a coil that is part of the closed current path.

The closed current path comprising the third coil and at least one of the first and the second coil may be free of the power supply. It is to be understood that the current path may still, at least at one point, be connected to a single first pole of the power supply. However, the current path does not comprise both poles of the power supply. It is to be understood that components in the current path may still connected to both poles of the power supply by means of the coil which is not part of the current path and which may be connected to the second pole of the power supply.

The closed path enables an induced voltage and subsequently caused current to be dissipated in the coils comprised by the closed path.

According to an embodiment of the first exemplary aspect,
- the remaining of the three coils is connected to a second pole of the power supply or
- the remaining of the three coils is connected to the first pole of the power supply or
- the remaining of the three coils is disconnected from the power supply

The remaining of the three coils is the third coil, different from the first and the second coil connected to a first pole of the power supply.

According to a first example, the remaining of the three coils (i.e., the third coil) may be connected to a second pole of the power supply. For instance, when the first and the second coil are connected to a positive pole, the third coil may be connected to the negative pole and vice versa. Such switching states may for instance be, according to the above notation, PNN, NPN, NNP, PPN, PNP, NPP. Such switching states are known as C-phases from the 12-step motor control.

The method may therefore be considered to comprise a switching state of DC injection braking. However, a few important differences exist to injection braking. Firstly, the power supply used for braking is the same as used for driving the motor in the proposed method. Also, the switches used are the same as for driving the motor, whereas in regular DC injection breaking, none of the coils is connected to a pole of the power supply by a switch used for driving. Also, the C-phase is only one switching phase in a plurality of mutually distinct switching phases (and thus switching states), i.e., no constant current is applied until the motor is stopped, but the C-phase is part of a continued control pattern by which the motor is kept at a controlled speed.

For instance, at least one O-phase of the 12-step switching pattern disclosed above may be replaced by a C-phase. Similarly, a C-phase may replace at least one or at least 4 of the O-phases within a 6-step motor control. The following replacements are disclosed wherein the first element indicates the previously used O-phase at its regular range of angles and the second element indicates the newly used C-phase to replace it. PNO->PNN, PNO->NPN, PNO->NNP, PNO->PPN, PNO->PNP, PNO->NPP, PON->PNN, PON->NPN, PON->NNP, PON->PPN, PON->PNP, PON->NPP, OPN->PNN, OPN->NPN, OPN->NNP, OPN->PPN, OPN->PNP, OPN->NPP, NPO->PNN, NPO->NPN, NPO->NNP, NPO->PPN, NPO->PNP, NPO->NPP, NOP->PNN, NOP->NPN, NOP->NNP, NOP->PPN, NOP->PNP, NOP->NPP, ONP->PNN, ONP->NPN, ONP->NNP, ONP->PPN, ONP->PNP or ONP->NPP.

For instance, a normal (e.g., regular) 6-step control (i.e., switching pattern) may comprise, during a 360° rotation of the motor, e.g. in regular respective angle coverages of 60° respectively, the sequence of switching phases PNO, PON, NPO, OPN, NOP, ONP. It is now proposed, for example, to implement an altered switching pattern in which the floating coil of a given switching phase (i.e., the coil not connected to either negative or positive pole of the power supply in the above regular switching phases) notated with an "O" (e.g., the third coil in the first switching state PNO) is connected to one of the two poles of the power supply. For instance, this current O-coil of the respective switching state of the regular switching pattern may be connected to the pole to which it will become connected in the subsequent switching pattern of the regular switching pattern. E.g., in the isolated succession of switching patterns PNO, PON, the third coil of the first switching pattern PNO will be connected to the negative pole of the power supply in the subsequent switching pattern PON. The switching pattern PNO (i.e., an O-phase) may thus be replaced by the switching pattern PNN (i.e., a C-phase). By replacing the switching patterns of the full rotation of 360° of the motor, the following switching pattern is proposed for instance: PNN, PPN, NPN, NPN, NNP, PNP. Here, the respective replacements PNO->PNN, PON->PPN, NPO->NPN, OPN->NPN, NOP->NNP, ONP->PNP have been carried out with respect to the regular 6-step switching pattern.

The technical effect is, inter alia, that current is injected (e.g., by one of the coils) in a coil, which is located in between two magnet poles of the permanent magnet and the permanent (rotor) magnet basically exerts no effect (i.e., induces no current) on it (e.g., and vice versa, i.e., the energized coil exerts no momentum on the permanent magnet).

The respective replacement of a given first switching phase by another second switching phase may be done completely, i.e., for the entire angle coverage of the first switching phase. For instance, alternatively, the second switching phase (i.e., the replacement phase/switching state) may be active during a share of the angle coverage of the first (i.e., replaced) switching phase. I.e., two coils may be connected to the same pole of the power supply for a fraction of the angle coverage of a given regular (here, first) switching phase. For the remainder of the angle coverage of the first switching phase, the first switching phase may be used. I.e., for the remainder of the angle coverage, one coil may be floating while the other two are connected to mutually different poles of the power supply. During the angle coverage of the first switching phase, the method may alternate between the first and the second switching state at least once, twice, three times, four times, 5 times, 10 times, 20 times, 50 times, 100 times, 500 times, 1000 times, 5000 times, 10000 times or more. Fully replacing the first switching phase by the second may leed to a very strong energy absorption and thus high ohmic losses in the coils of the motor. Partial replacements allow for a regulation of energy absorption.

The method may act dynamically, e.g., in a closed loop control. For instance, the motor control method may monitor a (e.g., momentary) voltage (e.g, over one or more coils of the motor) during motor operation (e.g., during generator operation) and may (e.g., only) alter the switching phases dynamically when the measured voltage exceeds a threshold. For instance, the method may act dynamically per switching phase. If the measured voltage exceeds the predefined threshold, the switching states of the current switching phase may be altered, for instance by replacing it with the above disclosed replacement switching states. In the subsequent switching phase, the method may only alter the regular switching phase (e.g., by at least partially replacing it with another switching pattern) if the (e.g., momentary) voltage exceeds a (e.g., the) predefined threshold.

In particular during a given regular phase (i.e., an O-phase), the method may comprise measuring a voltage over at least one coil of the motor. If the voltage exceeds a predefined voltage threshold, the O-phase may be replaced by a C-phase. For instance, one of the replacements as disclosed above may be used. The C-phase may remain active until the next regular switching phase is reached, i.e., until the motor rotation angle reaches the end of the angle coverage of the current regular switching pattern and enters the beginning of the angle coverage of the subsequent switching pattern. Additionally or alternatively, the C-phase may remain active until the voltage falls below the predefined threshold or below a second predefined threshold, wherein the second predefined threshold may be lower than the predefined threshold, for instance. The predefined voltage may be different from the second predefined voltage. I.e., the replacement switching phase of the current switching phase may stay active until either the measured voltage drops below a (e.g., second) predefined voltage or the angle coverage of the current regular switching phase is completed.

By partially replacing the regular switching phases (O-phases in a 6-step motor control pattern), a "quasi-12-step" pattern may be implemented comprising the 12 switching phases in the following sequence. PNO, *PNN, PON, *PPN, NPO, *NPN, OPN, *NPN, NOP, *NNP, ONP, *PNP. The switching phases highlighted by an asterisk are the replacement switching phases. They at least partially replace the respective preceding switching state within the angle coverage of the respective preceding switching phase. I.e., the regular switching phase PNO may cover angles of 0-59°. Within these 60° of angle coverage, the switching state PNO may be active for a first part of the 60° angle coverage (e.g., until a measured voltage over at least oe coil of the motor exceeds a predefined threshold value). For the remainder of the angle coverage, the replacement switching state (here, PNN) may be active. This remainder may be reffered to as replacement angle coverage share. When the motor rotation angle reaches 59° (e.g., exceeds it), the next regular switching state (here, PON) may become active and so on.

The replacement angle coverage share of a respective switching phase (e.g., all switching phases) may vary dynamically between 0° and the angle coverage of the regular (i.e., replaced) switching phase, for instance 60°. The replacement angle coverage share may be (e.g., at all times) different from half of the angle coverage of the regular switching phase. For instance, the replacement angle coverage share may for instance at least be 55%, 50%, 65%, 70%, 80% or 90% of the angle coverage of the regular switching phase.

For a 12-step switching pattern, the C-phases may also be replaced (e.g., analogously to the above replacements), for instance as follows (same notation as above). PNN->NPN, PNN->NNP, PNN->PPN, PNN->PNP, PNN->NPP, NPN->PNN, NPN->NNP, NPN->PPN, NPN->PNP, NPN->NPP, NNP->PNN, NNP->NPN, NNP->PPN, NNP->PNP, NNP->NPP, PPN->PNN, PPN->NPN, PPN->NNP, PPN->PNP, PPN->NPP, PNP->PNN, PNP->NPN, PNP->NNP, PNP->PPN, PNP->NPP, NPP->PNN, NPP->NPN, NPP->NNP, NPP->PPN or NPP->PNP.

It is therefore proposed to use the C-phases outside their regular rotation angle coverage in the 12-step motor control. The range of rotation angles of the motor in which a switching pattern is used is shifted with respect to its regular rotation angle coverage and/or enlarged.

For example, the third coil may be left open (i.e. floating). It may thus not be connected to the power supply, i.e. not connected to a pole of the power supply. The switching states of the coils here are NNO, NON, ONN, PPO, POP, OPP. In this switching states, the power supply is entirely disconnected from the coils, yet there is still a current possible through the two connected (first and second) coils.

For example, the third coil is connected to the first pole of the power supply. In this case, all three coils are connected to the same pole of the power supply. The two possible switching states are PPP and NNN. This case may be considered to be similar to dynamic braking. However, as this switching state is part of a switching pattern comprising a plurality of mutually distinct switching phases, the proposed control method does not equate to dynamic braking. For instance, in this case, the switching pattern may comprise at least three mutually distinct switching phases. I.e., there may be at least one switching phase in which the three coils are not connected to the same pole.

Table 1 summarizes an example of replacements of regular switching phases with new (i.e., replacement) switching states. Steps 1, 2, 3, 4, 5, 6 belong to a 6-step switching pattern and are O-phases, intermediate steps 1a, 2a, 3a, 4a, 5a, 6a may be present in a 6-step switching pattern and are C-phases. The altered switching phases according to the method are the ones 1, 2, 3, 4, 5, 6 in both 6-step and 12-step switching patterns. Steps 1a, 2a, 3a, 4a, 5a, 6a may stay unchanged. For instance, in a given O-phase (step 1, 2, 3, 4, 5, or 6) may be at least partially or fully replaced by the respective C-phase as shown in Table 1.

The switch during a regular switching phase from the regular switching state of that phase to the replacement switching state may be based on a measured voltage over at least one coil of the motor. For instance, replacement switching state may be activated if the voltage exceeds a predefined voltage threshold.

**Table 1**

| Step | Regular | New | Angle |
|---|---|---|---|
| 1 | PNO | PNN | 0° |
| 1a | PNN | PNN | 30° |
| 2 | PON | PPN | 60° |
| 2a | PPN | PPN | 90° |
| 3 | OPN | NPN | 120° |
| 3a | NPN | NPN | 150° |
| 4 | NPO | NPP | 180° |
| 4a | NPP | NPP | 210° |
| 5 | NOP | NNP | 240° |
| 5a | NNP | NNP | 270° |
| 6 | ONP | PNP | 300° |
| 6a | PNP | PNP | 330° |

According to an embodiment of the first exemplary aspect,
- connecting a given coil to a pole of the power supply during a switching phase comprises connecting it to the pole during at least 5%, 10%, 15%, 20%, 30%, 40%, 50%, 60%, 70%, 80%, 90%, 95%, 99% of the switching phase or during the entire switching phase.

During a switching phase, for instance during the regular rotation angle coverage of a given switching phase of a 6-step or 12-step motor control pattern, the disclosed connecting of the coils may be provided for the entire duration (e.g., regular angle range) of the switching phase. Additionally or alternatively, the connecting may only be done over a share of the switching phase, for instance at least 5%, 10%, 15%, 20%, 30%, 40%, 50%, 60%, 70%, 80%, 90%, 95%, 99%. For the remainder of the switching phase, for instance, the regular switching phase of the angle range may be used.

According to an embodiment of the first exemplary aspect, during a single switching phase, the closed current path is altered at least once.

For instance, within one regular angle coverage of a given phase (e.g., 0-59°of a first switching phase of a 6-step motor control), a first pattern closing a first current path may switch to a second pattern closing a second current path. For instance, such a switch may be PNN->NPN, PNN->NNP, PNN->PPN, PNN->PNP, PNN->NPP, NPN->PNN, NPN->NNP, NPN->PPN, NPN->PNP, NPN->NPP, NNP->PNN, NNP->NPN, NNP->PPN, NNP->PNP, NNP->NPP, PPN->PNN, PPN->NPN, PPN->NNP, PPN->PNP, PPN->NPP, PNP->PNN, PNP->NPN, PNP->NNP, PNP->PPN, PNP->NPP, NPP->PNN, NPP->NPN, NPP->NNP, NPP->PPN or NPP->PNP.

A switch of the pattern and therefore an alteration of the closed current path may be repeated at least one, twice of more times while the rotation angle is within the regular rotation angle coverage of the given switching phase.

For instance, the third coil may be connected to a first of the poles of the power supply (and disconnected from the second of the poles of the power supply, i.e., PNP, PNN, NPP, NPN) for a given share of the phase of the control pattern (e.g., less than or equal to 5%, 10%, 15%, 20%, 25%, 30%, 40%, or 50%) and subsequently be connected to the second pole of the power supply for a given share of the phase of the control pattern (e.g., less than or equal to 5%, 10%, 15%, 20%, 25%, 30%, 40%, or 50%).

Additionally or alternatively to altering the current path, the switching states of the coils may be altered further during a regular switching phase. For instance, the third coil may be switched to the open position. Possible switching sequences are then the following. PNO->NNO, PNO->NON, PNO->ONN, PNO->PPO, PNO->POP, PNO->OPP, PON->NNO, PON->NON, PON->ONN, PON->PPO, PON->POP, PON->OPP, OPN->NNO, OPN->NON, OPN->ONN, OPN->PPO, OPN->POP, OPN->OPP, NPO->NNO, NPO->NON, NPO->ONN, NPO->PPO, NPO->POP, NPO->OPP, NOP->NNO, NOP->NON, NOP->ONN, NOP->PPO, NOP->POP, NOP->OPP, ONP->NNO, ONP->NON, ONP->ONN, ONP->PPO, ONP->POP, ONP->OPP, PNN->NNO, PNN->NON, PNN->ONN, PNN->PPO, PNN->POP, PNN->OPP, NPN->NNO, NPN->NON, NPN->ONN, NPN->PPO, NPN->POP, NPN->OPP, NNP->NNO, NNP->NON, NNP->ONN, NNP->PPO, NNP->POP, NNP->OPP, PPN->NNO, PPN->NON, PPN->ONN, PPN->PPO, PPN->POP, PPN->OPP, PNP->NNO, PNP->NON, PNP->ONN, PNP->PPO, PNP->POP, PNP->OPP, NPP->NNO, NPP->NON, NPP->ONN, NPP->PPO, NPP->POP, NPP->OPP, NNO->PNO, NNO->PON, NNO->OPN, NNO->NPO, NNO->NOP, NNO->ONP, NON->PNO, NON->PON, NON->OPN, NON->NPO, NON->NOP, NON->ONP, ONN->PNO, ONN->PON, ONN->OPN, ONN->NPO, ONN->NOP, ONN->ONP, PPO->PNO, PPO->PON, PPO->OPN, PPO->NPO, PPO->NOP, PPO->ONP, POP->PNO, POP->PON, POP->OPN, POP->NPO, POP->NOP, POP->ONP, OPP->PNO, OPP->PON, OPP->OPN, OPP->NPO, OPP->NOP or OPP->ONP.

During at least one regular rotation angle coverage of a switching phase, at least 2, 3, 4, 5, 6, 7, 8, 9, 10 or more different switching states may be provided.

During a at least one regular rotation angle coverage of a switching phase, at least 2, 3, 4, 5, 6, 7, 8, 9, 10, 20, 30, 40, 50, 100, 200, 300, 500, 10000, 50000 or 10000 changes of switching state may be provided.

One coil, for instance the third coil, may be switch back and forth (i.e., alternate) between the first and the second pole of the power supply during a given phase of the control pattern, for instance at least once, twice, three times or more per phase. Such a pattern according to the above notation would look like PNP->PNN (optionally repeated) or NPN->NPP (optionally repeated), for instance.

One coil, for instance the third coil may be disconnected from the first and second pole of the power supply for a given share (disconnected state, like in the common O-phase without alteration) of the phase of the control pattern, e.g., less than or equal to 5%, 10%, 15%, 20%, 25%, 30%, 40%, or 50%. For instance, such a disconnected state may be provided between shares of the phase of the switching pattern in which the coil is connected to one of the poles of the power supply.

For instance, additionally or alternatively, instead of a typical O-phase switching pattern, NNN or PPP may be switched for at least a share of the O-phase, e.g., less than or equal to 1%, 5%, 10%, 15%, 20%, 25%, 30%, 40%, or 50% e.g., in a continuous subphase or intermittently sectioned into smaller time chunks.

According to an embodiment, the original switching pattern of a respective O-phase is at least temporarily (e.g., less than or equal to 1%, 5%, 10%, 15%, 20%, 25%, 30%, 40%, or 50% of the duration of the O-phase) or fully replaced by the respective pattern of the 12-step motor control typically used assuming the rotor or the stator is 90° or 90°-120° further ahead than actually the case (e.g., than measured by the sensors, e.g., Hall sensors).

During a single regular O-phase, at least two or more mutually different current paths are closed. The paths may be closed sequentially one after the other or at the same time. An example would be, starting from NPO as a common O-pattern, to switch to NPP (or OPP) and NPN (or NON). First, in NPP (or OPP), current may frow through the second and the third coil, then during NPN (or NON), the current may flow through the closed loop formed through the first and third coil. By switching the remaining coil to O (open), no current from the power supply is drawn and/or no excessive voltage can be supplied to it. Changing the closed path at least once during a given phase may reduce the wear on the coils.

According to an embodiment of the first exemplary aspect,
- the majority of switching phases is exempt of at least one of the plurality of switching phases and/or comprises more than half of the plurality of switching phases and/or at least 7/12, 2/3, 3/4, 5/6, 11/12 of switching phases or all of the switching phases.

The majority of switching phases may for instance be understood as a number of switching phases larger than half of the total number of switching phases in a given switching pattern (e.g., during a 360° rotation of the motor).

The majority may additionally or alternatively be understood as the switching phases comprised by this majority cover, e.g. in sum, rotational angles of the motor of over 180°. The majority may for instance be understood as the entirety of the available rotation angles of 360°.

According to an embodiment of the first exemplary aspect,
- connecting comprises closing at least one switch of a half-bridge electrically arranged between the power supply and a respective coil.

According to an embodiment of the first exemplary aspect,
- connecting a respective coil to a pole of the power supply comprises a plurality of connections and disconnections in order to supply a pulse-width modulated voltage to the coil.

For instance, one switch of the half-bridge connected to a given coil may be switched off and on in order to provide a pulse width modulated voltage to the coil. Such switching may for instance be done at a frequency of 10kHz - 100kHz.

Thus, when a given coil is connected to a pole of the power supply, this may comprise it being connected intermittently by way of a pulse-width modulation. I.e., any N or P as used above may in reality look like NONONO... or POPOPOP... in fast succession (i.e., at switching speeds of 10kHz or higher) but will still be considered a N or P for simplicity.

According to an embodiment of the first exemplary aspect, the method further comprises, during a propelling operation,
- connecting a first and a second of the three coils to a first pole of the power supply and connecting the remaining of the three coils to the second pole in a first half of the plurality of switching phases and
- connecting a first of the three coils to a first pole of the power supply, disconnecting a second of the three coils from the power supply and connecting the remaining of the three coils to the second pole in a second half of the plurality of switching phases.

Such switching may for instance take the shape of a 12-step motor control of the kind PNO, PNN, PON, PPN, OPN, NPN, NPO, NPP, NOP, NNP, ONP, PNP according to the above notation.

In a propelling operation, the motor exerts a momentum in transportation direction on the motor-roller. The goods are either accelerated in transportation direction or held at a given speed despite forces counteracting the movement along this direction, for instance gravitational force, inertia and/or other mechanical forces.

In the propelling operation, the method may use the common control pattern, i.e., for a given phase, it may use the known patterns NPO or PNO. Disconnecting means for instance opening the switches to the power supply for a considerable share of the respective phase, e.g., at least 70%, 80%, 90%, 95% or 99%.

As soon as the motor changes from propelling operation to generating operation, the switching patterns as disclosed above are used in order to dissipate at least some of the electrical energy induced into the coils through the coils directly and not supply over-voltages to the motor driver and/or the motor controller.

According to an embodiment of the first exemplary aspect,
- during the braking operation, during at least a share of at least one switching phase, at least one coil is connected and/or disconnected from the power supply as if the rotation angle of the motor were offset by a predefined amount of degrees, in particular by 90 to 120 degrees.

Taking the example of a 12-step motor control, a first phase may at least partially be replaced by a second phase in the following constellations. The element on the left side of the arrow signifies the regular switching state and the element right of the arrow signifies the replacement switching state. PNO->NNP, PNN->ONP,PON->PNP, PPN->PNO, OPN->PNN, NPN->PON, NPO->PPN, NPP->OPN, NOP->NPN, NNP->NPO, ONP->NPP, PNP->NOP. For instance, only for the pairs that have a C-phase on the right side, the exchange of the switching state from the one on the left to the one on the right side may be done. I.e., PNO->NNP, PON->PNP, OPN->PNN, NPO->PPN, NOP->NPN, ONP->NPP. For the remaining pairs, the left switching pattern may be kept unchanged.

Additionally or alternatively, the following at least partial replacements may be done. PNO->PPN, PNN->OPN, PON->NPN, PPN->NPO, OPN->NPP, NPN->NOP, NPO->NNP, NPP->ONP, NOP->PNP, NNP->PNO, ONP->PNN, PNP->PON. Like above, only the following replacements may be done. PNO->PPN, PON->NPN, OPN->NPP, NPO->NNP, NOP->PNP, ONP->PNN.

Table 2 shows the replacement pattern according to an embodiment. The regular switching phases on the left may be at least partially replaced by the new patterns on the right, be it option 1, 1a, 2, 2a or 3 for any given regular switching phase. New option 3 is disclosed in delay above with respect to table 1.

**Table 2**

| Regular | New Option 1 | New Option 1a | New Option 2 | New Option 2a | New Option 3 | Angle |
|---|---|---|---|---|---|---|
| | | | PNO | | | 270° |
| | | | PNN | PNN | | 300° |
| | | | PON | | | 330° |
| PNO | | | PPN | PPN | PNN | 0° |
| PNN | | | OPN | | PNN | 30° |
| PON | | | NPN | NPN | PPN | 60° |
| PPN | PNO | | NPO | | PPN | 90° |
| OPN | PNN | PNN | NPP | NPP | NPN | 120° |
| NPN | PON | | NOP | | NPN | 150° |
| NPO | PPN | PPN | NNP | NNP | NPP | 180° |
| NPP | OPN | | ONP | | NPP | 210° |
| NOP | NPN | NPN | PNP | PNP | NNP | 240° |
| NNP | NPO | | | | NNP | 270° |
| ONP | NPP | NPP | | | PNP | 300° |
| PNP | NOP | | | | PNP | 330° |
| | NNP | NNP | | | | 0° |
| | ONP | | | | | 30° |
| | PNP | PNP | | | | 60° |

By adjusting the switching pattern according to the embodiments of the present disclosure, the force vector exerted by the coils onto the magnet may be altered. For instance, a component of the force vector acting radially to the rotation axis of the motor may be enlarged compared to regular switching patterns. Such a force vector component may be counter acted by the bearings and may therefore not lead to an acceleration or deceleration of the motor.

According to an embodiment of the first exemplary aspect, connecting and/or disconnecting the at least three coils is at least partially based on at least one of
- a PI-control,
- a 12-step motor control pattern or
- signals obtained from at least one sensor, in particular a hall sensor

The PI (proportional integral) control may be used to regulate the speed and/or torque of the motor. Other control approaches such as P, I, D, ID, PD, PID are possible as well.

According to a second aspect of the subject matter, a motor-roller controller is disclosed, the motor-roller controller comprising memory including instructions that, when executed by the at least one processor, cause the motor-roller controller at least to perform the method according to the first exemplary aspect.

According to a third aspect of the subject matter, a motor-roller controller is disclosed, the motor-roller controller comprising means for performing the respective steps of the method according to the first exemplary aspect.

According to a further aspect of the subject matter, a drive unit is disclosed, the drive unit comprising memory including instructions that, when executed by the at least one processor, cause the drive unit at least to perform the method according to the first exemplary aspect.

According to a further aspect of the subject matter, a drive unit is disclosed, the drive unit comprising means for performing the respective steps of the method according to the first exemplary aspect.

The drive unit of the above aspects may for instance be integrated with and/or into a motor roller. For instance, the drive unit may be configured to be controllable by a motor-roller controller.

According to a further aspect of the subject matter, a motor roller is disclosed, the motor roller comprising memory including instructions that, when executed by the at least one processor, cause the motor roller at least to perform the method according to the first exemplary aspect.

According to a further aspect of the subject matter, a motor roller is disclosed, the motor roller comprising means for performing the respective steps of the method according to the exemplary first aspect.

The motor roller may for instance comprise a drive unit according to the above aspects. For instance, the motor roller may be configured to be controllable by a motor-roller controller.

According to a fourth exemplary aspect of the subject matter, a conveyor system is disclosed, the conveyor system comprising at least one a motor roller and a motor-roller controller according to the second or third exemplary aspect, wherein the motor controller is configured to control a motor of at least one of the at least one motor roller.

According to an embodiment of the fourth exemplary aspect,
- at least one of the at least one motor roller is arranged in a downward oriented segment of the conveyor system and/or the motor roller is arranged in a deceleration segment of the conveyor system.

A deceleration segment may for instance correspond to a segment, in which a transport speed is reduced over its distance. As a result, a negative acceleration may be exerted onto the transported goods. A motor roller in the segment may work in generator operation.

A motor arranged in a downward oriented segment may also work in generator operation.

According to an aspect of the subject matter, the method may be performed and/or controlled by an apparatus, for instance a PLC, a server, a PC, a laptop, a modem, a router, and/or combinations thereof. Alternatively, this method may be performed and/or controlled by more than one apparatus. Alternatively, the method may for instance be performed and/or controlled by an electronic device, e.g. a motor-roller control device, a drive unit, a motor roller and/or combinations thereof in a conveyor system. For instance, the method may be performed and/or controlled by using at least one processor of the electronic device.

According to a further exemplary aspect, a computer program is disclosed, the computer program when executed by a processor causing an apparatus, for instance a a PLC, server, a computer, a PC, a laptop, a control unit or an integrated circuit of an embedded control apparatus, to perform and/or control the actions/steps of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., only) Memory (ROM) or hard disk of a computer, or be intended for distribution of the program, like an optical disc.

According to a further exemplary aspect, an apparatus is disclosed, configured to perform and/or control or comprising respective means for performing and/or controlling the method according to the first exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

These and other aspects of the subject matter will be explained more detail with reference to the following figure. In the figure show:
- Fig. 1: a conventional conveyor according to an embodiment;
- Fig. 2: a motor roller according to an embodiment;
- Fig. 3: a motor roller control structure according to an embodiment;
- Fig. 4a,b: a stylized motor according to an embodiment;
- Fig. 5: regular switching phases of a three motor coils according to an embodiment;
- Fig. 6a-c: different connection possibilities of three motor coils according to an embodiment;
- Fig. 7a,b: different possibilities of connecting two of three motor coils according to an embodiment;
- Fig. 8a,b: conveyor system segments according to an embodiment.

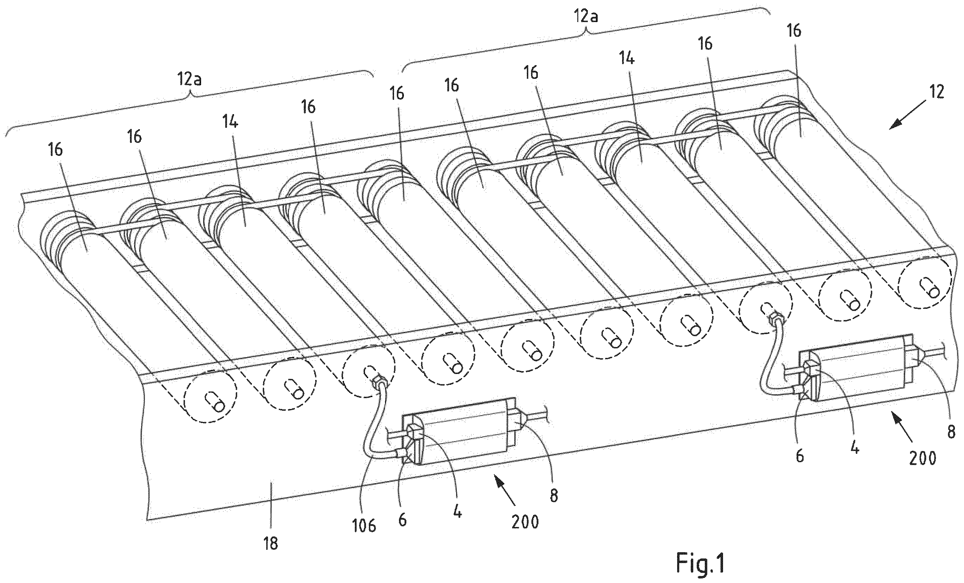

Fig. 1 illustrates a conveyor segment. The conveyor segment may comprise motor-rollers 14 and rollers 16. A conveyor line 12 may have two or more conveyor zones 12a. Within each conveyor zone 12a, one motor-roller 14 is mechanically coupled with at least one, preferably between two to seven rollers 16, in particular by V-belts or poly-V-belts or the like. Other mechanical couplings are also possible.

A motor-roller 14 is rotatable arranged on a rack 18 and comprises a motor within a hollow tube. The motor within the hollow tube is connected to the controller 200 (e.g., of the second and/or third exemplary aspect) via its motor-roller control port 6 and control line 106.

For each of these zones 12a, a separate controller 200 is provided controlling the respective motor-roller 14. The controllers 200 are connected to power and a control bus via their power inlets 4 and I/O-ports 8.

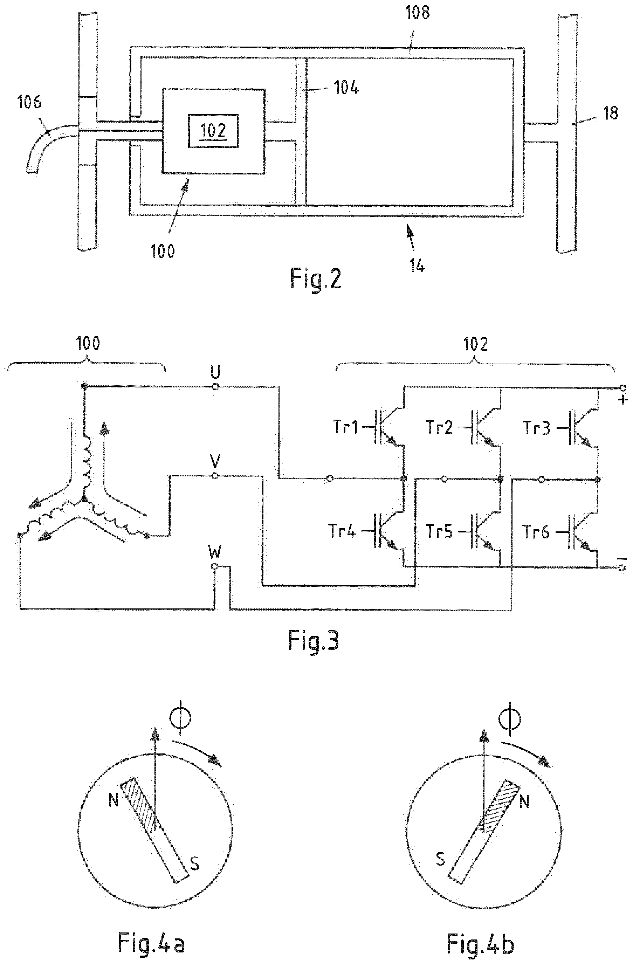

Fig. 2 shows a schematic drawing of a motor roller 14. The motor roller 14 may be rotatably fixed to a rack 18 and comprise a motor 100. The motor is fixed to the rack 18 and to the outer cylinder 108 of the motor roller 14. A drive unit 102 may be provided inside the motor roller 14. The drive unit 14 may obtain control commands from the motor-roller controller 200 through the control line 106. The drive unit 102 may, during braking operation, implement the method according to the first exemplary aspect.

Fig. 3 illustrates a wiring pattern of a motor roller motor 100 in which the three coils are oriented in a star pattern. The three coils may be denoted as the U-, V- and W-phase. Each coil is connected to a respective half bridge of a control circuit that may be part of a drive unit 102. A given half-bridge comprises two transistors. The transistors can be switched to connect the respective coil to a positive or to a negative pole of the power supply.

Table 2 illustrates the switching pattern according to a regular 12-step motor control pattern.

**Table 2**

| Degree | 0 | 30 | 60 | 90 | 120 | 150 | 180 | 210 | 240 | 270 | 300 | 330 |
|---|---|---|---|---|---|---|---|---|---|---|---|---|
| Transistor\ Step | S1 | S1a | S2 | S2a | S3 | S3a | S4 | S4a | S5 | S5a | S6 | S6a |
| T1 | ON | ON | ON | ON | | | | | | | | ON |
| T2 | | | | ON | ON | ON | ON | ON | | | | |
| T3 | | | | | | | | ON | ON | ON | ON | ON |
| T4 | | | | | | ON | ON | ON | ON | ON | | |
| T5 | ON | ON | | | | | | | | ON | ON | ON |
| T6 | | ON | ON | ON | ON | ON | | | | | | |
| Phase-U | N | N | N | N | - | S | S | S | S | S | - | N |
| Phase-V | S | S | - | N | N | N | N | N | - | S | S | S |
| Phase-W | - | S | S | S | S | S | - | N | N | N | N | N |
| Notation | PNO | PNN | PON | PPN | OPN | NPN | NPO | NPP | NOP | NNP | ONP | PNP |

As can be seen the pattern alternates between O-phases (at angles 0, 60, 120, 180, 240, 300°) and C-phases (at angles 30, 90, 150, 210, 270, 330°). The pattern may be altered to lower the share of O-phases as shown below in table 3. Replacements are shown by arrows (->). The switching phases of steps S1, S2, S3, S4, S5 and S6 may be partially replaced or fully. A 6-step motor control does not comprise the phases S1a, S2a, S3a, S4a, S5a and S6a. In the proposed method, only the O-phases (in 6-step or 12-step motor control) may be altered.

**Table 3**

| Degree | *0 | 30 | *60 | 90 | *120 | 150 | *180 | 210 | *240 | 270 | *300 | 330 |
|---|---|---|---|---|---|---|---|---|---|---|---|---|
| Transistor\ Step | S1 | S1a | S2 | S2a | S3 | S3a | S4 | S4a | S5 | S5a | S6 | S6a |
| T1 | ON | ON | ON | ON | | | | | | | →ON | ON |
| T2 | | | → ON | ON | ON | ON | ON | ON | | | | |
| T3 | | | | | | | → ON | ON | ON | ON | ON | ON |
| T4 | | | | | → ON | ON | ON | ON | ON | ON | | |
| T5 | ON | ON | | | | | | | → ON | ON | ON | ON |
| T6 | →ON | ON | ON | ON | ON | ON | | | | | | |
| Phase-U | N | N | N | N | →S | S | S | S | S | S | →N | N |
| Phase-V | S | S | N | N | N | N | N | N | →S | S | S | S |
| Phase-W | S | S | S | S | S | S | →N | N | N | N | N | N |
| Notation | PNO →PNN | PNN | PON →PPN | PPN | OPN →NPN | NPN | NPO →NPP | NPP | NOP →NNP | NNP | ONP →PNP | PNP |

Fig. 4 offers a stylized view on a motor. The magnetic flux Φ is caused by the three coils and is rotated according to the switching pattern. The permanent magnet is either (Fig. 4a) lagging behind the flux vector Φ in a propulsion operation or ahead of the flux vector Φ in a braking operation (Fig. 4b).

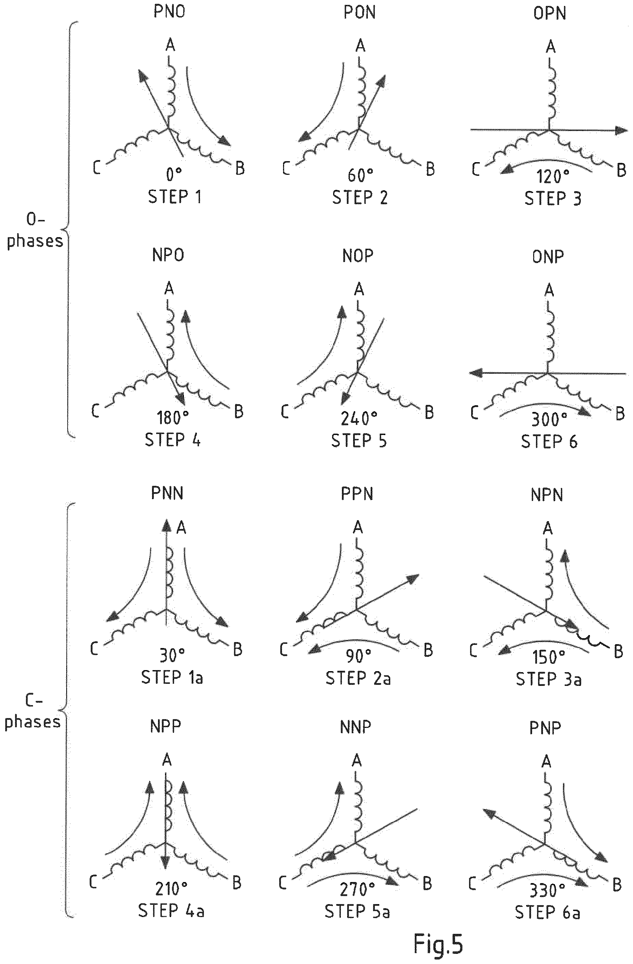

Fig. 5 shows the regular switching phases of a 12-step motor control as shown in Table 1. The upper half shows O-phases in which one coil is disconnected from the power supply. The lower half shows C-phases in which all three coils are connected to a respective pole of the power supply.

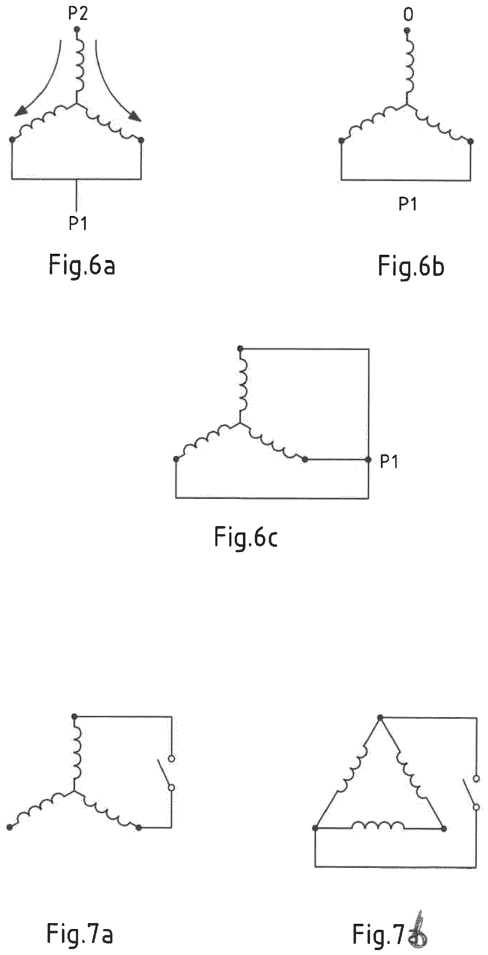

Fig. 6 demonstrates how three different switching phases in which the lower two coils are connected to the same pole P1. P1 may be either positive or negative.

In the first example phase shown in Fig. 6a, the third coil is connected to the pole P2 which is different from P1. P2 may be negative if P1 is positive and vice versa. This is a C-phase connection pattern as shown above for the 12-step motor control. Current can be drawn from and provided to the control circuit as both poles of the power supply are connected. The motor can still be controlled energizing the coils. At the same time, the closed current path of comprising the lower two coils provides a closed current path within that enables the motor to dissipate energy through ohmic losses without endangering the controller with over-voltages.

Fig. 6b shows a second connection pattern in which the upper coil is disconnected from the power supply. Here, the power supply does not provide any energy to the coils. Still, a closed current path enables the motor to dissipate energy.

Fig. 6c shows a third pattern in which all coils are connected to a single pole of the power supply. This connection pattern provides 3 closed current paths, one for each pair of coils and offers a high braking performance while on the other hand offering low controllability of the braking intensity.

The shown patterns may be used individually or jointly, in particular to at least partially replace O-phases.

Fig. 7 shows a how a closed current path can be formed by connecting two coils together in a star arrangement of coils (Fig. 7a) and in a delta arrangement of coils (Fig. 7b).

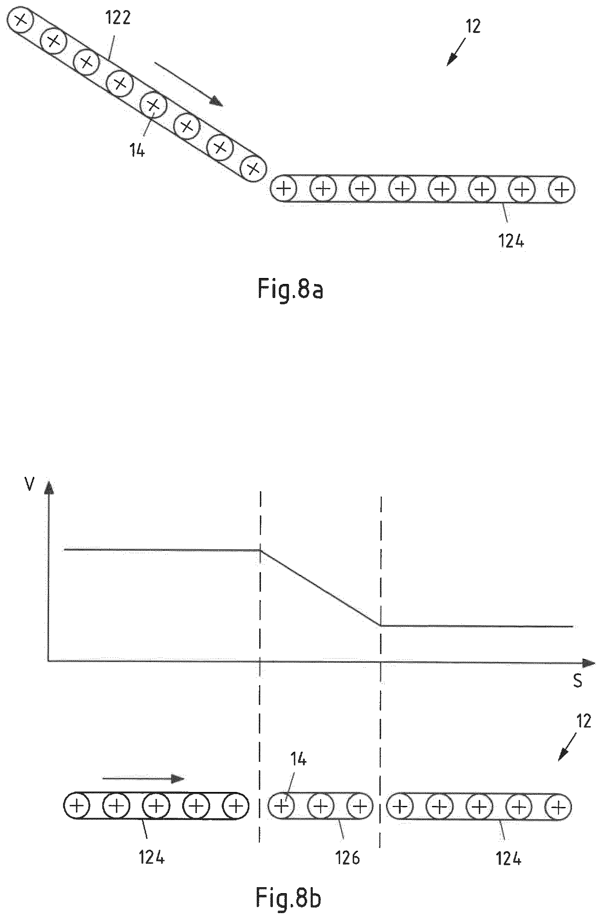

In Fig. 8a, a downward oriented conveyor segment 122 within a conveyor system is shown. The conveyor line 12 may further comprise a flat, regular conveyor segment 124. In the downward oriented conveyor segment 122, a motor-roller 14 may be arranged that is (e.g., primarily) operating in generator operation.

Similarly, Fig. 8b shows a deceleration conveyor segment 126 within a conveyor system. The deceleration conveyor segment 126 may have the purpose to decelerate the transported goods. The motor roller 14 arranged in the deceleration conveyor segment 126 thus needs to counteract the inertial force of decelerated goods. It thus at least temporarily works in generator operation. The conveyor line 12 may further comprise a flat, regular conveyor segment 124 without altering speed profile.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Having the same meaning as the expression "A and/or B", the expression "at least one of A or B" may be used herein. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are (e.g., only) exemplary, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of (e.g., only) one of the enumerated features is possible. The specific combination of all subsequently enumerated features may as well be considered. Also, a plurality of (e.g., only) one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The subject-matter has been described above by means of example embodiments. It should be noted that there are alternative ways and variations which are obvious to a skilled person in the art and can be implemented without deviating from the scope of the appended claims.

## Claims

1. A method for controlling an electric motor of a motor roller in a step-wise switching pattern comprising a sequence of multiple mutually different switching phases, comprising, during a braking operation, in the majority of the switching phases,
- connecting a first and a second of three coils of the electric motor to a first pole of the power supply.

2. The method according to one of claim 1, wherein
- connecting a first and a second of the three coils to a first pole of the power supply is based on a measured voltage across at least one coil of the electric motor.

3. The method according to one of claim 1 or 2, wherein
- connecting the first and the second coil to the first pole of the power supply comprises forming a closed current path, in particular a closed current path disconnected from at least one pole of the power supply.

4. The method according to one of claim 1 to 3, wherein
- the remaining of the three coils is connected to a second pole of the power supply or
- the remaining of the three coils is connected to the first pole of the power supply or
- the remaining of the three coils is disconnected from the power supply.

5. The method according to one of claim 1 to 4, wherein
- connecting a given coil to a pole of the power supply during a switching phase comprises connecting it to the pole during at least 5%, 10%, 15%, 20%, 30%, 40%, 50%, 60%, 70%, 80%, 90%, 95%, 99% of the switching phase or during the entire switching phase.

6. The method according to one of claim 1 to 5, wherein
- during a single switching phase, the closed current path is altered at least once.

7. The method according to one of claim 1 to 6, wherein
- the majority of switching phases is exempt of at least one of the plurality of switching phases and/or comprises more than half of the plurality of switching phases and/or at least 7/12, 2/3, 3/4, 5/6, 11/12 of switching phases or all of the switching phases.

8. The method according to one of claim 1 to 7, wherein
- connecting comprises closing at least one switch of a half-bridge electrically arranged between the power supply and a respective coil.

9. The method according to one of claims 1 to 8, wherein
- connecting a respective coil to a pole of the power supply comprises a plurality of connections and disconnections in order to supply a pulse-width modulated voltage to the coil.

10. The method according to one of claim 1 to 9, further comprising, during a propelling operation,
- connecting a first and a second of the three coils to a first pole of the power supply and connecting the remaining of the three coils to the second pole in a first half of the plurality of switching phases and
- connecting a first of the three coils to a first pole of the power supply, disconnecting a second of the three coils from the power supply and connecting the remaining of the three coils to the second pole in a second half of the plurality of switching phases.

11. The method according to one of claims 1 to 10, wherein
- during the braking operation, during at least a share of at least one switching phase, at least one coil is connected and/or disconnected from the power supply as if the rotation angle of the motor were offset by a predefined amount of degrees, in particular by 90 to 120 degrees.

12. A motor-roller controller comprising at least one processor and at least one memory including instructions that, when executed by the at least one processor, cause the motor-roller controller at least to perform the method according to one of claims 1 to 11.

13. A motor-roller controller comprising means for performing the respective steps of the method according to one of claims 1 to 11.

14. A conveyor system comprising at least one a motor roller and a motor-roller controller according to claim 12 or 13, wherein the motor controller is configured to control a motor of at least one of the at least one motor roller.

15. The conveyor system according to claim 14, wherein
- at least one of the at least one motor roller is arranged in a downward oriented segment of the conveyor system and/or the motor roller is arranged in a deceleration segment of the conveyor system.
